# EUROPEAN PATENT APPLICATION

(11) **EP 3 965 016 A1**
(43) Date of publication of application: **09.03.2022**
(21) Application number: 21186381.6
(22) Date of filing: 19.07.2021
(51) Int. Cl.: G06N 3/04, G06N 3/08, G06N 5/04

(54) **STORAGE MEDIUM, DATA PRESENTATION METHOD, AND INFORMATION PROCESSING DEVICE**

(30) Priority: 07.09.2020 JP 2020149885
(71) Applicant: FUJITSU LIMITED, Kanagawa 211-8588 (JP)
(72) Inventor: Katoh, Takashi, Kawasaki-shi, Kanagawa, 211-8588 (JP); Uemura, Kento, Kawasaki-shi, Kanagawa, 211-8588 (JP); Yasutomi, Suguru, Kawasaki-shi, Kanagawa, 211-8588 (JP); Hayase, Tomohiro, Kawasaki-shi, Kanagawa, 211-8588 (JP)
(74) Representative: Hoffmann Eitle

(57) **Abstract**

A non-transitory computer-readable storage medium storing a data presentation program that causes at least one computer to execute a process, the process includes acquiring certain data from an estimation target data set that uses an estimation model, based on an estimation result for the estimation target data set; and presenting data obtained by changing the certain data in a direction orthogonal to a direction in which loss of the estimation model fluctuates, in a feature space that relates to feature amounts obtained from the estimation target data set.

## Description

### FIELD

The embodiments discussed herein are related to a storage medium, a data presentation method, and an information processing device.

### BACKGROUND

In a model learned by machine learning such as deep learning, in some cases, a mistake in choice occurs due to a domain shift or the like in which data having properties different from properties at the time of training is input, and the accuracy deteriorates. In recent years, when a model makes a wrong output by mistake, analysis has been performed on why the mistake was made. For example, there are known techniques for presenting data in which the model made a mistake and for visualizing a domain shift that has occurred.

Japanese Laid-open Patent Publication No. 2017-4509 is disclosed as related art.

### SUMMARY

According to an aspect of the embodiments, a non-transitory computer-readable storage medium storing a data presentation program that causes at least one computer to execute a process, the process includes acquiring certain data from an estimation target data set that uses an estimation model, based on an estimation result for the estimation target data set; and presenting data obtained by changing the certain data in a direction orthogonal to a direction in which loss of the estimation model fluctuates, in a feature space that relates to feature amounts obtained from the estimation target data set.

### BRIEF DESCRIPTION OF DRAWINGS

FIG. 1 is a diagram explaining an information processing device according to a first embodiment;
FIG. 2A and FIG. 2B are diagrams explaining a disadvantage in a reference technique;
FIG. 3 is a diagram explaining a disadvantage in the reference technique;
FIG. 4 is a functional block diagram illustrating a functional configuration of the information processing device according to the first embodiment;
FIG. 5 is a diagram explaining an analysis by the information processing device according to the first embodiment;
FIG. 6 is a flowchart illustrating a flow of processing according to the first embodiment;
FIG. 7 is a diagram explaining a model to be analyzed;
FIG. 8 is a diagram explaining application to the model to be analyzed;
FIG. 9 is a diagram explaining mapping to a feature space;
FIG. 10 is a diagram explaining a calculation of a direction of decreasing loss of target data;
FIG. 11 is a diagram explaining mapping of a minutely changed feature amount;
FIG. 12 is a diagram explaining a calculation of a direction of decreasing loss of target data;
FIG. 13 is a diagram explaining a calculation of a direction of increasing loss of target data;
FIG. 14 is a diagram explaining a calculation of the feature amounts of other training data and application source data;
FIG. 15 is a diagram explaining a search for a feature amount of actual data;
FIG. 16 is a diagram explaining data display;
FIG. 17 is a diagram explaining an analysis result and a countermeasure;
FIG. 18A and FIG. 18B are diagrams explaining a comparison with a reference technique;
FIG. 19 is a diagram explaining an effect;
FIG. 20 is a diagram explaining an example in which an autoencoder is applied;
FIG. 21 is a diagram explaining an analysis using the autoencoder; and
FIG. 22 is a diagram explaining a hardware configuration example.

### DESCRIPTION OF EMBODIMENTS

Embodiments of a data presentation program, a data presentation method, and an information processing device disclosed in the present application are hereinafter described in detail with reference to the drawings. Note that the present embodiments are not limited to these embodiments. Furthermore, the respective embodiments may be appropriately combined within a range without inconsistency.

With the above techniques, it is difficult to identify the cause of the deterioration in accuracy of the model. For example, the presentation of data that involves a mistake may not allow the identification of the cause of the mistake, and the presentation of the domain shift may not allow the identification of even a cause that has a relation with the deterioration in accuracy.

In one aspect, it is aimed to provide a data presentation program, a data presentation method, and an information processing device capable of identifying the cause of the deterioration in accuracy of a model.

According to one embodiment, the cause of the deterioration in accuracy of a model may be identified.

### [First Embodiment]

### [Description of Information Processing Device]

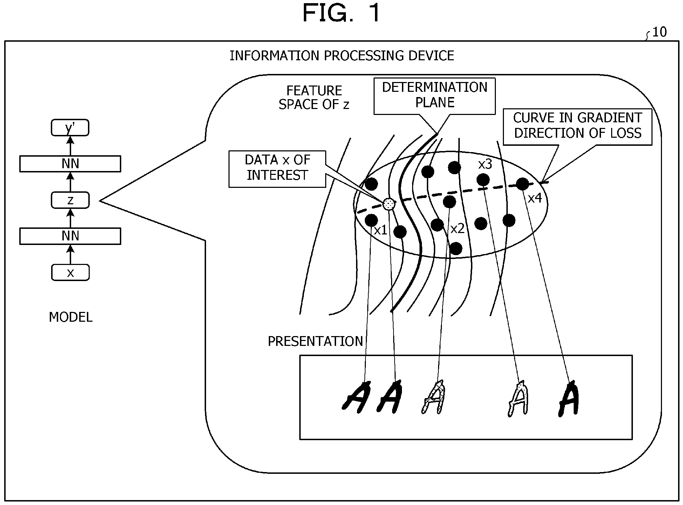

FIG. 1 is a diagram explaining an information processing device 10 according to a first embodiment. In recent years, there has been a demand to know the basis for choice made by a model learned by machine learning. One of the factors that cause the model to make a mistake is known to be a domain shift in which data with properties different from properties at the time of training is input, and this domain shift deteriorates the model. The information processing device 10 illustrated in FIG. 1 is an example of a computer device that identifies the cause of the deterioration in accuracy of the model in order to meet the above demand, by outputting information that suggests the cause of a mistake for data in which the model made the mistake.

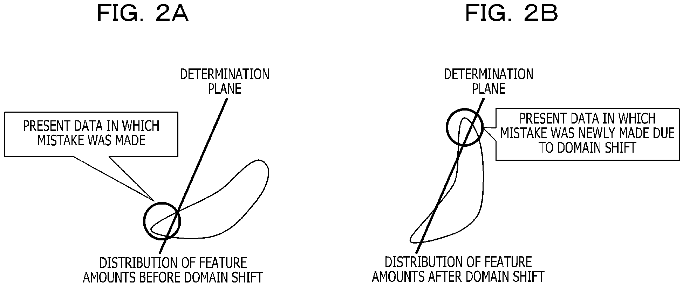

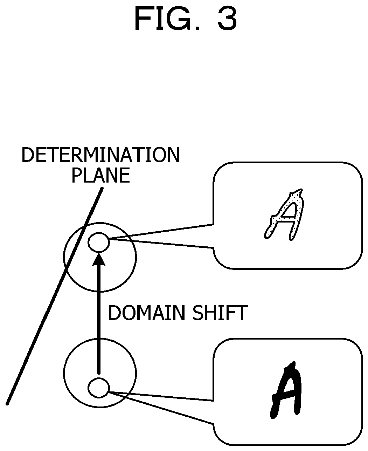

Initially, a disadvantage of a reference technique performed as an approach that involves the deterioration in accuracy of the model will be described. FIGs. 2 and 3 are diagrams explaining a disadvantage in the reference technique. In the reference technique, the presentation of data in which the model made a mistake is executed. As illustrated in FIG. 2A, in the reference technique, the feature amount of the data in which the mistake was made is identified with respect to a determination plane for correctness verification in distribution of feature amounts before the domain shift, and input data corresponding to the identified feature amount (data that involves the mistake) is presented. Furthermore, as illustrated in FIG. 2B, in the reference technique, the feature amount of data in which a mistake was newly made due to the domain shift is identified with respect to a determination plane for correctness verification in distribution of feature amounts after the domain shift, and input data corresponding to the identified feature amount (data that involves the mistake) is presented.

In this manner, the reference technique that presents only the data that involves a mistake may not be capable of identifying the cause of the mistake, and thus may not be allowed to execute a countermeasure such as model re-learning.

Furthermore, as illustrated in FIG. 3, a reference technique that visualizes a domain shift that has occurred when the cause of a mistake is the domain shift is also known. However, simply presenting the occurrence of the domain shift may not allow the identification as to whether the cause resides in a change in the color of the image, which is the input data, or the cause resides in the inclination of the image, which is the input data, and this makes it difficult to consider a countermeasure such as model re-learning.

Thus, the information processing device 10 according to the first embodiment acquires data that involves a mistake, which is contained in application source data, which is an estimation target data set using a model. Then, the information processing device 10 presents data obtained by shifting the data that involves the mistake, in a direction orthogonal to a direction in which loss of the model fluctuates in a feature space of the model, as data related to model deterioration due to a domain shift.

For example, it is assumed that the domain shift has a direction orthogonal to a direction parallel to a gradient of loss of the deteriorated model with respect to data of interest. Then, the information processing device 10 draws a curve in the direction orthogonal to the loss of the deteriorated model with respect to the data of interest by starting from the feature amount of the data of interest in the feature space, and outputs data that has the feature amount in the neighborhood of the drawn curve in an order in which the curve passes the data.

In the example in FIG. 1, the information processing device 10 outputs, to a user, data x of interest and neighboring data x1, x2, x3, and x4 located within a predetermined distance from a curve in a gradient direction. In this manner, the information processing device 10 visualizes and outputs a domain shift in a direction orthogonal to the gradient, thereby identifying the cause of the deterioration in accuracy of the model.

### [Functional Configuration]

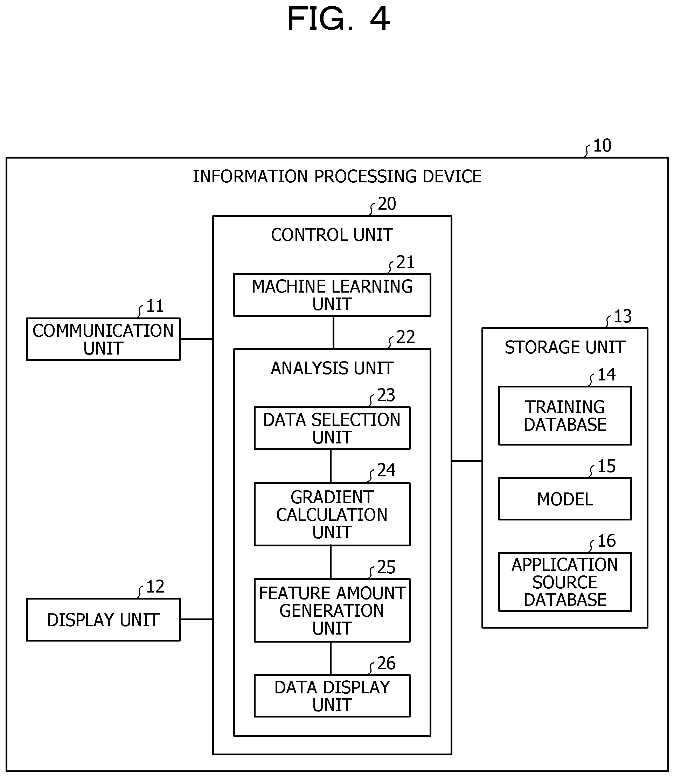

FIG. 4 is a functional block diagram illustrating a functional configuration of the information processing device 10 according to the first embodiment. As illustrated in FIG. 4, the information processing device 10 includes a communication unit 11, a display unit 12, a storage unit 13, and a control unit 20.

The communication unit 11 is a processing unit that controls communication with another device, and is implemented by, for example, a communication interface or the like. For example, the communication unit 11 receives training data, application source data, various instructions, and the like from an administrator terminal. Furthermore, the communication unit 11 transmits an analysis result and the like to the administrator terminal.

The display unit 12 is a processing unit that displays various types of information, and is implemented by, for example, a display, a touch panel, or the like. For example, the display unit 12 displays an analysis result and the like.

The storage unit 13 is an example of a processing unit that stores various types of data, programs executed by the control unit 20, and the like, and is implemented by, for example, a memory, a hard disk, or the like. This storage unit 13 stores a training database 14, a model 15, and an application source database 16.

The training database 14 is a data group constituted by a plurality of pieces of training data used for machine learning training of the model 15. For example, the training data stored in the training database 14 is teacher data in which "label" and "data" are associated with each other. Examples of the data include image data in which people, animals, vehicles, and the like appear, and not only image data but also waveform data, audio data, and the like may be adopted.

The model 15 is an example of an estimation model using a neural network (hereinafter sometimes abbreviated as NN), which is generated by machine learning using the training database 14. For example, the model 15 estimates whether or not a person appears in image data when the image data is input. Note that the model 15 may be the whole model 15 generated by machine learning, or may be a parameter of the model 15 generated by machine learning.

The application source database 16 is a data group constituted by application source data to be applied to the model 15 generated by machine learning. For example, the application source database 16 includes data to be classified by the model 15.

The control unit 20 is a processing unit that is in charge of the entire information processing device 10 and, for example, is implemented by a processor or the like. This control unit 20 includes a machine learning unit 21 and an analysis unit 22. Note that the machine learning unit 21 and the analysis unit 22 are implemented by a process or the like executed by an electronic circuit included in a processor or the processor.

The machine learning unit 21 is a processing unit that executes machine learning of the model 15 using the training database 14. For example, the machine learning unit 21 inputs the data among "label and data" of the training data of the training database 14 to the model 15, and acquires an output of the model 15. Then, the machine learning unit 21 executes optimization on various parameters of the NN of the model 15 such that an error between the output of the model and the label (for example, a square error) becomes smaller.

For example, the machine learning unit 21 inputs data x out of training data (data x, label y) to the model 15, and acquires output data y' from the model 15. Then, the machine learning unit 21 executes optimization on the NN of the model 15 such that an error between the label y and the output data y' becomes smaller. Then, the machine learning unit 21 ends the machine learning at any timing, such as when the machine learning using all the training data is completed or when the error becomes less than a threshold value, and completes the generation of the model 15. Note that various publicly known approaches may be adopted as a machine learning approach.

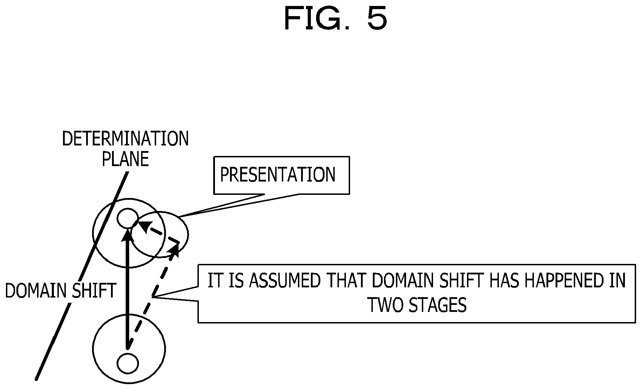

The analysis unit 22 includes a data selection unit 23, a gradient calculation unit 24, a feature amount generation unit 25, and a data display unit 26, and is a processing unit that analyzes the cause of the deterioration in accuracy of the model 15. FIG. 5 is a diagram explaining an analysis by the information processing device 10 according to the first embodiment. As illustrated in FIG. 5, the analysis unit 22 assumes that the domain shift has a direction orthogonal to a direction parallel to a gradient of loss of the deteriorated model 15 with respect to data of interest. For example, the analysis unit 22 visualizes and presents a domain shift in the direction orthogonal to the gradient, assuming that the domain shift occurs in two stages.

In more detail, the analysis unit 22 draws a curve in the direction orthogonal to the loss of the model 15 with respect to the data of interest by starting from the feature amount of the data of interest in a feature space, and presents data that has the feature amount in the neighborhood of the drawn curve in an order in which the curve passes the data.

The data selection unit 23 is a processing unit that selects the data of interest. For example, the data selection unit 23 selects, as the data of interest, training data that involves a mistake by applying the training database 14 to the model 15 for which machine learning has been completed. Furthermore, the data selection unit 23 selects, as the data of interest, application source data that involves a mistake by applying the application source database 16 to the model 15 for which machine learning has been completed. Then, the data selection unit 23 outputs the selected data of interest (hereinafter sometimes referred to as particular data or target data) to the gradient calculation unit 24.

The gradient calculation unit 24 is a processing unit that calculates the feature amount of the particular data and loss of the model 15. For example, the gradient calculation unit 24 inputs the particular data to the model 15, and acquires the feature amount of the particular data from any layer of the NN of the model 15. Then, the gradient calculation unit 24 calculates a direction (gradient) of decreasing loss of the particular data and a direction (gradient) of increasing loss of the particular data in the feature space.

For example, the gradient calculation unit 24 calculates the gradient by differentiating the loss function used for machine learning of the model 15. Furthermore, the gradient calculation unit 24 is also capable of generating a plurality of feature amounts obtained by minutely changing the feature amount of the particular data to plot the feature amounts on the feature space, and calculating the gradient using the amount of change in the plotted feature amounts. Then, the gradient calculation unit 24 outputs the particular data, the feature amount of the particular data, and each gradient to the feature amount generation unit 25.

In addition, the gradient calculation unit 24 calculates the calculation of each gradient in response to a request from the feature amount generation unit 25, which will be described later, and outputs the calculation result to the feature amount generation unit 25. For example, each time a feature amount minutely changed by the feature amount generation unit 25 is generated, the gradient calculation unit 24 calculates a direction of decreasing loss of the feature amount and a direction of increasing loss of the feature amount.

The feature amount generation unit 25 is a processing unit that generates each feature amount obtained by minutely changing the feature amount of the particular data in a direction in which the loss decreases and a direction in which the loss increases. For example, the feature amount generation unit 25 plots the feature amount of the particular data on the feature space, and generates and plots a first feature amount obtained by minutely changing the feature amount in the direction of increasing loss of the particular data calculated by the gradient calculation unit 24. Next, the feature amount generation unit 25 causes the gradient calculation unit 24 to generate the direction of increasing loss of the first feature amount, and generates and plots a second feature amount obtained by minutely changing the first feature amount in the direction of increasing the loss in the feature space. In this manner, the feature amount generation unit 25 generates a plurality of feature amounts in the direction of increasing the loss.

Furthermore, the feature amount generation unit 25 executes similar processing also for the direction of decreasing the loss calculated by the gradient calculation unit 24. Note that the amount to be changed may be freely set.

The data display unit 26 is a processing unit that identifies actual data close to each feature amount generated by the feature amount generation unit 25, from among other pieces of training data and application source data apart from the particular data, and presents the identified actual data to the user. For example, the data display unit 26 inputs visualization candidate data, which is each piece of other training data or each piece of other application source data apart from the particular data, to the model 15. Subsequently, the data display unit 26 acquires respective feature amounts corresponding to each piece of visualization candidate data from any layer of the model 15, and maps the acquired feature amounts on the feature space.

Then, the data display unit 26 identifies the feature amounts of respective pieces of most neighboring visualization candidate data that have a closest distance to each feature amounts generated by the feature amount generation unit 25 in the feature space, from among the feature amounts of respective pieces of visualization candidate data. Then, the data display unit 26 presents the training data or the application source data corresponding to the feature amount of each piece of most neighboring visualization candidate data to the user.

In this manner, the data display unit 26 is capable of selecting data that indicates the tendency of the domain shift and presenting the selected data to the user.

### [Flow of Processing]

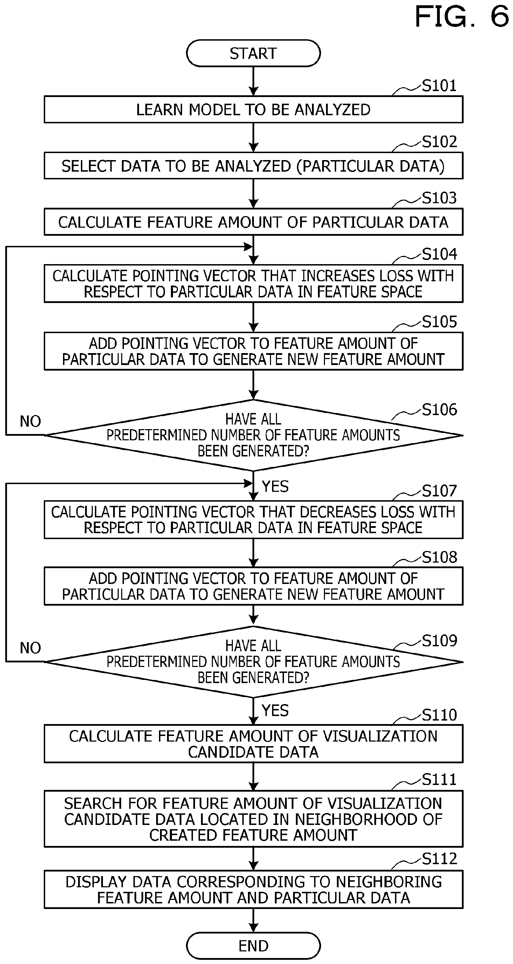

FIG. 6 is a flowchart illustrating a flow of processing according to the first embodiment. As illustrated in FIG. 6, the machine learning unit 21 executes machine learning of the model 15 to be analyzed, using the training database 14 (S101).

When the machine learning ends, the analysis unit 22 selects the particular data, which is data to be analyzed, from the training database 14 and the application source database 16 (S102), and uses the machine-learned model 15 to calculate the feature amount of the selected particular data (S103).

Then, the analysis unit 22 calculates a pointing vector that increases loss with respect to the particular data in the feature space (S104), and adds the pointing vector to the feature amount of the particular data to generate a new feature amount (S105). Here, the analysis unit 22 repeats S104 and the following steps until all the predetermined number of feature amounts are generated (S106: No).

Thereafter, when all the predetermined number of feature amounts are generated (S106: Yes), the analysis unit 22 calculates a pointing vector that decreases loss with respect to the particular data in the feature space (S107), and adds the pointing vector to the feature amount of the particular data to generate a new feature amount (S108). Here, the analysis unit 22 repeats S107 and the following steps until all the predetermined number of feature amounts are generated (S109: No).

Thereafter, when all the predetermined number of feature amounts are generated (S109: Yes), the analysis unit 22 calculates a feature amount of the visualization candidate data (S110). Then, the analysis unit 22 searches for the feature amount of visualization candidate data located in the neighborhood of the generated feature amount (S111), and displays data corresponding to the neighboring feature amount and the particular data, which is a target to be analyzed (S112).

### [Specific Examples]

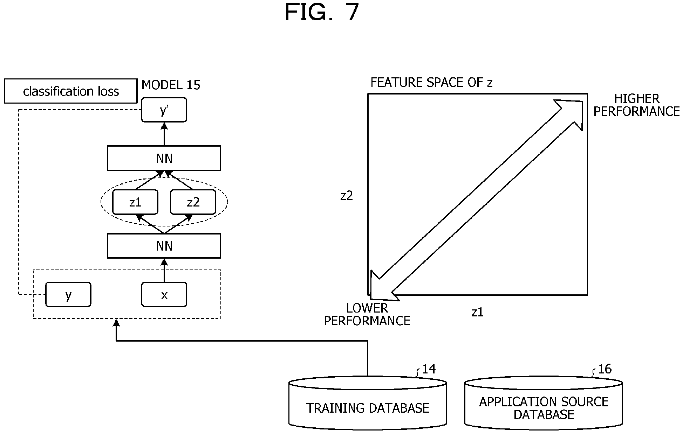

Next, a specific example of the above-described processing will be described with reference to FIGs. 7 to 17. FIG. 7 is a diagram explaining the model 15 to be analyzed. As illustrated in FIG. 7, initially, an estimation model (model 15) to be analyzed, which has been machine-learned using the training database 14, is prepared.

The model 15 is a model that generates two feature amounts (z1 and z2) from input data x and outputs output data y' using the two feature amounts. Therefore, as illustrated in FIG. 7, a two-dimensional feature space using the two feature amounts (z1 and z2) will be described here as an example, and it is supposed that, as an example, in the feature space, the performance of the model 15 becomes higher toward the upper right and the performance of the model 15 becomes lower toward the lower left.

Note that, here, it is supposed that the machine learning unit 21 has completed the machine learning of the model 15. For example, in the model 15, when the data x out of the training data (the data x and the label y) is input, the data y' is output, and optimization has been executed on the NN such that, an error between the label y and the data y' becomes smaller.

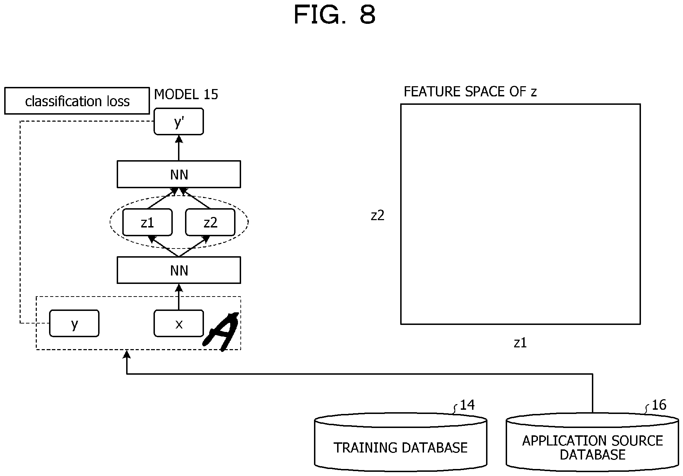

Next, the analysis unit 22 selects and labels data that has been found to be unclassifiable by the model 15. FIG. 8 is a diagram explaining application to the model 15 to be analyzed. As illustrated in FIG. 8, the analysis unit 22 selects the target data (particular data) in which the model 15 newly made a mistake due to the domain shift, from among pieces of application source data in the application source database 16, and sets a correct answer label in the target data.

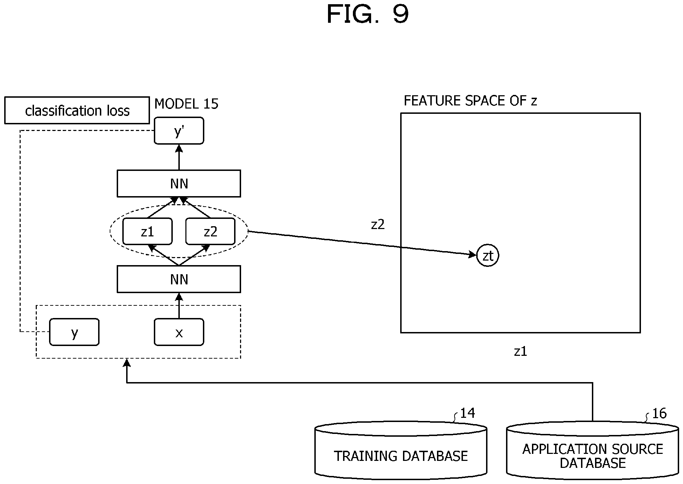

Subsequently, the analysis unit 22 calculates the feature amount and loss of the target data. FIG. 9 is a diagram explaining mapping to the feature space. As illustrated in FIG. 9, the analysis unit 22 inputs the selected target data to the model 15, and acquires the feature amounts (z1 and z2), which are examples of the first feature amount generated by the model 15. Then, the analysis unit 22 plots a feature amount zt corresponding to the acquired feature amounts on the feature space.

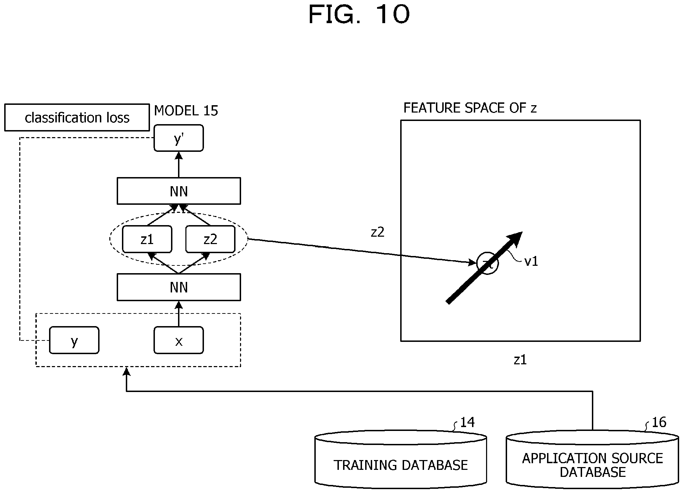

Following this, the analysis unit 22 calculates the direction of decreasing loss of the target data in the feature space. FIG. 10 is a diagram explaining a calculation of the direction of decreasing loss of target data. As illustrated in FIG. 10, the analysis unit 22 generates a vector v1 pointing to the direction of decreasing the loss by differentiating the loss function, and maps the generated vector v1 to the feature space.

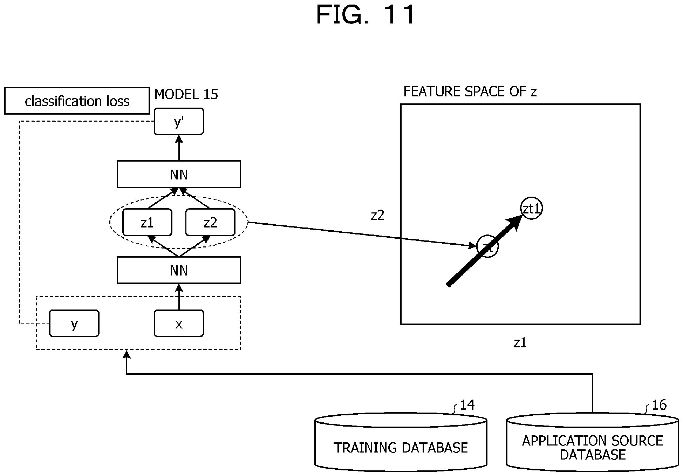

Subsequently, the analysis unit 22 generates a feature amount slightly changed in the direction of decreasing the loss, and calculates the loss again. FIG. 11 is a diagram explaining mapping of the minutely changed feature amount. As illustrated in FIG. 11, the analysis unit 22 generates and maps a feature amount zt1, which is an example of the second feature amount obtained by minutely changing the feature amount zt, in the direction pointed to by the vector v1.

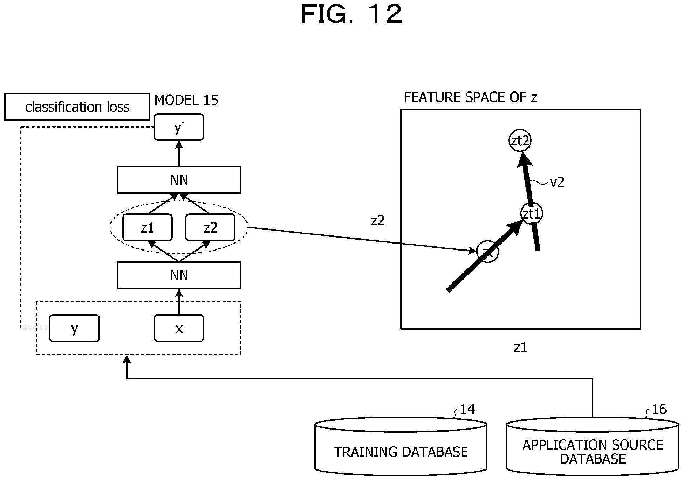

Thereafter, the analysis unit 22 repeats FIGs. 8 to 11 a certain number of times. FIG. 12 is a diagram explaining a calculation of the direction of decreasing loss of the target data. As illustrated in FIG. 12, the analysis unit 22 generates a vector v2 pointing to the direction of decreasing the loss by differentiating the loss function, and generates and maps a feature amount zt2 obtained by minutely changing the feature amount zt1 in the direction pointed to by the vector v2.

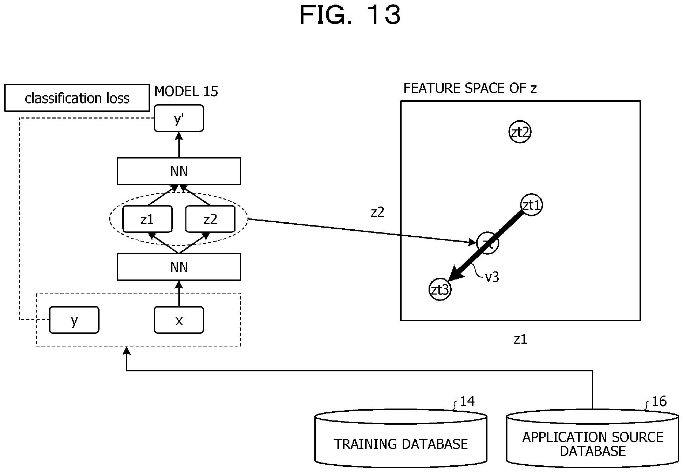

Furthermore, the analysis unit 22 executes processing similar to the processing in FIGs. 8 to 11 also for the direction of increasing the loss. FIG. 13 is a diagram explaining a calculation of the direction of increasing loss of the target data. For example, as illustrated in FIG. 13, the analysis unit 22 generates a vector v3 pointing to the direction of increasing the loss from the feature amount zt by differentiating the loss function, and generates and maps a feature amount zt3 obtained by minutely changing the feature amount zt in the direction pointed to by the vector v3.

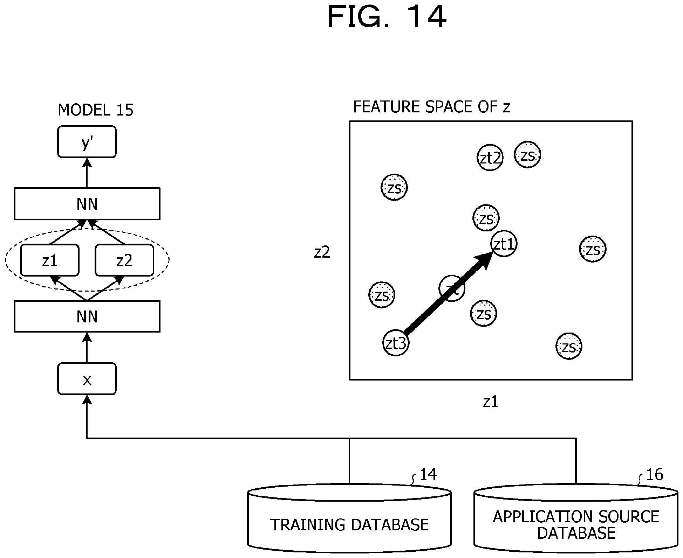

Thereafter, when the generation of the minutely changed feature amount is completed, the analysis unit 22 calculates the feature amount of other application source data or training data corresponding to the feature amount zt, apart from the target data. FIG. 14 is a diagram explaining a calculation of the feature amounts of other training data and application source data. As illustrated in FIG. 14, the analysis unit 22 inputs each piece of training data and each piece of application source data other than the target data to the model 15, and acquires each feature amount generated by the model 15 to plot a feature amount zs corresponding to each acquired feature amount on the feature space.

Then, the analysis unit 22 searches for the feature amount of actual data closest to each feature amount generated based on the target data.

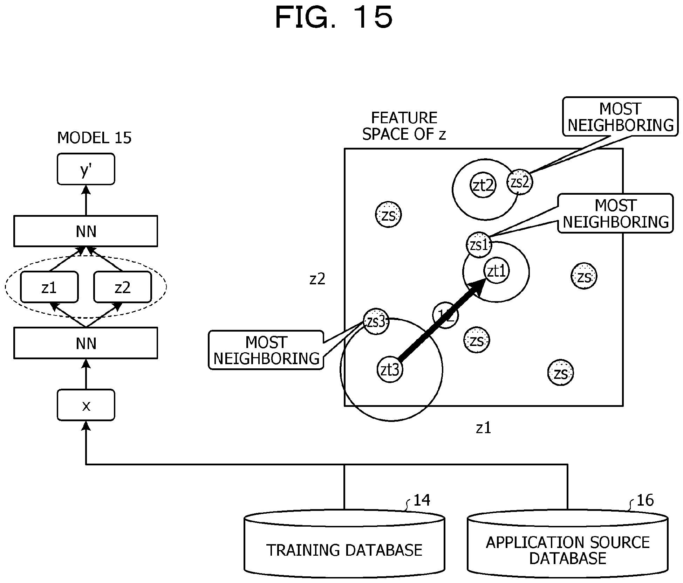

FIG. 15 is a diagram explaining a search for a feature amount of the actual data. As illustrated in FIG. 15, the analysis unit 22 identifies the created feature amounts zt1, zt2, and zt3 other than the feature amount zt, which is originally existing data, from among the feature amounts zt, zt1, zt2, and zt3. Then, the analysis unit 22 identifies, as the most neighboring feature amounts, the feature amount zs1 positioned closest to the feature amount zt1, the feature amount zs2 positioned closest to the feature amount zt2, and the feature amount zs3 positioned closest to the feature amount zt3.

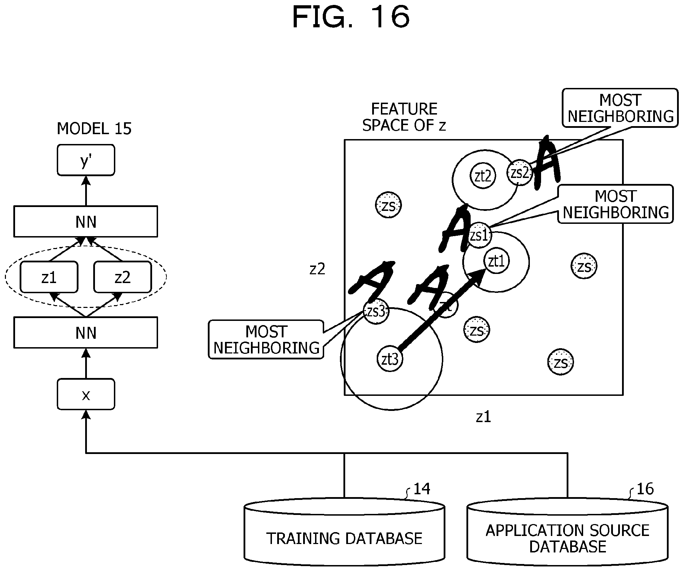

Thereafter, the analysis unit 22 displays respective pieces of data corresponding to the target data and the most neighboring feature amounts. FIG. 16 is a diagram explaining data display. As illustrated in FIG. 16, the analysis unit 22 acquires the target data corresponding to the feature amount zt from the application source database 16. Furthermore, the analysis unit 22 acquires data corresponding to each of the most neighboring feature amounts zs1, zs2, and zs3 from the training database 14 and the application source database 16. Then, the analysis unit 22 outputs the target data and each piece of data corresponding to the most neighboring feature amounts to the display unit 12.

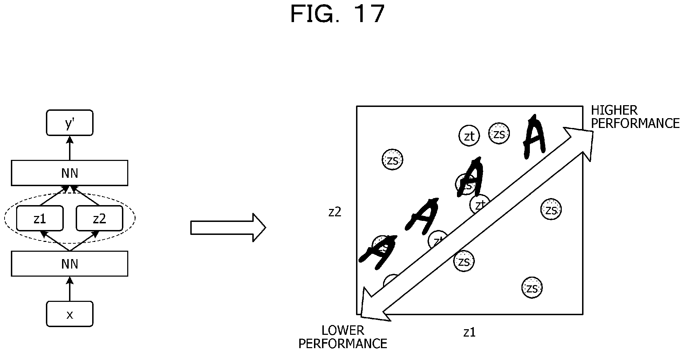

As a result, the analysis unit 22 may output information for the user to analyze the performance deterioration. FIG. 17 is a diagram explaining an analysis result and a countermeasure. As illustrated in FIG. 17, the analysis unit 22 is capable of visualizing that the performance has been deteriorated, with the inclination of characters, which are the data. In this case, the user is allowed to perform data expansion on the training database 14 in a direction of the inclination to execute re-learning of the model 15.

### [Effects]

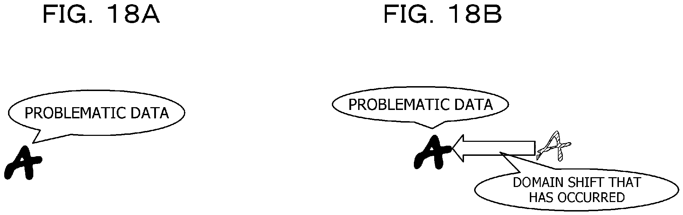

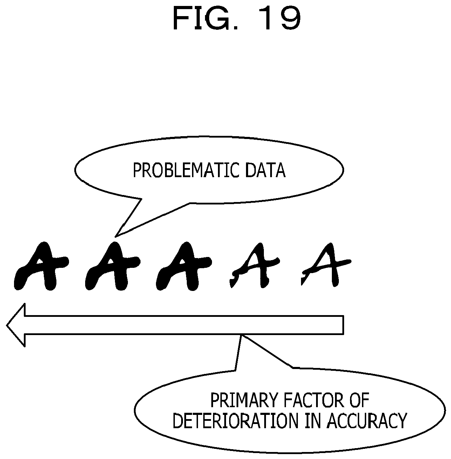

As described above, for data in which the model 15 made a mistake due to the domain shift or the like, the information processing device 10 may identify information that suggests the cause of the mistake, and present the identified information to the user. FIG. 18 is a diagram explaining a comparison with the reference technique. FIG. 19 is a diagram explaining an effect.

For example, as illustrated in FIG. 18A, in the reference technique, only an image A of problematic data in which the model 15 made a mistake is displayed. With this approach, it may not be possible to identify what in the image A is the cause of the problem. Furthermore, as illustrated in FIG. 18B, in the reference technique, the image A of non-problematic data and the image A of the problematic data are displayed, and the domain shift that has occurred is displayed. With this approach, it seems that there are changes in color and thickness, but it may not be possible to identify which one is affecting the performance deterioration.

In contrast to the above, as illustrated in FIG. 19, the information processing device 10 is capable of extracting and displaying each piece of data obtained by minutely changing the problematic data in each of a direction in which the loss increases and a direction in which the loss decreases, together with the image A of the problematic data. As a result, it may be possible to identify that the change in thickness is an elementary cause of the performance deterioration.

### [Second Embodiment]

Incidentally, while the model 15 using the NN has been described as an example in the above-described first embodiment, diverse machine learning models may be used for the model 15. Thus, in a second embodiment, an example in which an autoencoder and a model 15 to be analyzed are combined will be described.

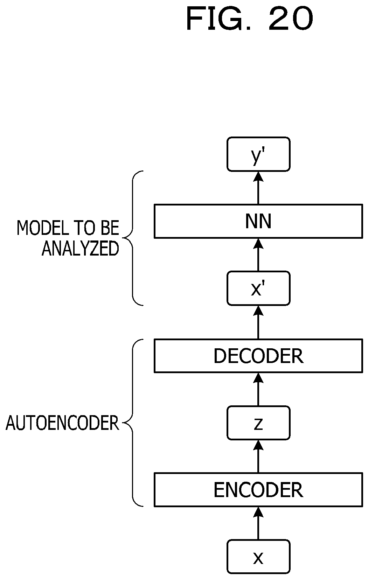

FIG. 20 is a diagram explaining an example in which an autoencoder is applied. As illustrated in FIG. 20, the autoencoder is inserted in a preceding stage of the model to be analyzed, as a mechanism for obtaining a curve in a LOSS direction in a feature space of the autoencoder. For example, a latent space of the autoencoder when the output of the autoencoder learned for the entire data is employed as the input of the model 15 is used as the feature space.

In such a configuration, a machine learning unit 21 executes machine learning of the autoencoder and machine learning of the model 15 to be analyzed, using a training database 14. For example, the machine learning unit 21 may be capable of executing machine learning of the model 15 to be analyzed after machine learning of the autoencoder is completed, and may also be capable of simultaneously executing machine learning of the autoencoder and the model 15 to be analyzed.

For example, the machine learning unit 21 inputs input data x given a label y to an encoder to acquire a feature amount z, and inputs the feature amount z to a decoder to generate reconstructed data x'. Then, the machine learning unit 21 executes machine learning of the autoencoder such that an error between the input data x and the reconstructed data x' becomes smaller. Similarly, the machine learning unit 21 inputs the input data x given the label y to the NN of the model 15 to be analyzed to acquire the output result y'. Then, the machine learning unit 21 executes machine learning of the model 15 to be analyzed such that an error between the label y and the output result y' becomes smaller.

As another example, the machine learning unit 21 may impose a constraint to reduce a change in the behavior of the model 15 to be analyzed between the input data and the reconstructed data when the autoencoder is learned.

For example, the machine learning unit 21 inputs the input data x given the label y to the NN of the model 15 to be analyzed to acquire the output result y'.

Furthermore, the machine learning unit 21 inputs the input data x given the label y to the encoder to acquire the feature amount z, and inputs the feature amount z to the decoder to generate the reconstructed data x'. Thereafter, the machine learning unit 21 inputs the reconstructed data x' of the autoencoder to the NN of the model 15 to be analyzed to acquire output result y".

At this time, the machine learning unit 21 may also be capable of executing machine learning of the autoencoder such that an error between the input data x and the reconstructed data x' becomes smaller and concurrently, an error between the output result y' obtained based on the input data x and the output result y" obtained based on the reconstructed data x' of the input data x becomes smaller.

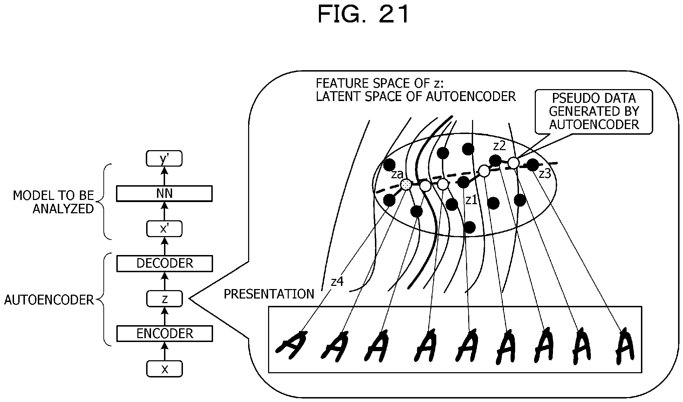

Next, an analysis using the machine-learned autoencoder will be described. FIG. 21 is a diagram explaining an analysis using the autoencoder. As illustrated in FIG. 21, the analysis unit 22 selects training data or application source data in which the model 15 made a mistake, and inputs the selected data to the encoder of the autoencoder to acquire a feature amount za (z1 and z2).

Then, the analysis unit 22 generates a feature amount obtained by minutely changing the feature amount za in a direction in which the loss decreases and also generates a feature amount obtained by minutely changing the feature amount za in a direction in which the loss increases by an approach similar to the approach of the first embodiment, to identify the direction of the gradient. Thereafter, the analysis unit 22 identifies feature amounts z1, z2, z3, and z4 of the most neighboring actual data positioned at the closest distance, for each of the generated feature amounts. As a result, the analysis unit 22 presents respective pieces of actual data (the training data or the application source data) corresponding to the feature amounts za, z1, z2, z3, and z4 to the user in the order of the gradient direction.

Here, the analysis unit 22 is also capable of further presenting data generated by the autoencoder and the like that were used, to the user. For example, the analysis unit 22 acquires four feature amounts (the white circles in FIG. 21) positioned on a straight line obtained by linearly interpolating the feature amounts za, z1, z2, z3, and z4 in the feature space. Subsequently, the analysis unit 22 inputs each of these four feature amounts to the decoder of the autoencoder, and generates reconstructed data (pseudo data) corresponding to each of the four feature amounts. Then, the analysis unit 22 presents the actual data corresponding to the above-described feature amounts and the respective pieces of reconstructed data to the user in the order of the positions on the linearly interpolated straight line.

In this manner, by utilizing the function that enables the autoencoder to generate pieces of pseudo data that are uniformly distributed and have continuous pieces of data to some extent in the feature space and have desired feature amounts, the information processing device 10 is allowed to present, to the user, data that is easy to analyze because the features of pieces of data to be presented tend to resemble. Furthermore, since the information processing device 10 is capable of interpolating data, a space in which data does not exist may be smoothly joined and presented. Note that the autoencoder is an example of an autoencoder, and other generation models such as a variational autoencoder (VAE) and bidirectional generative adversarial networks (GAN) may also be adopted.

### [Third Embodiment]

While the embodiments have been described above, the embodiments may be carried out in a variety of different modes in addition to the embodiments described above.

### [Data, Numerical Value, Etc.]

A data example, a numerical value example, a threshold value, a display example, the number of NN layers of the model 15, the number of dimensions of the feature space, and the like used in the above embodiments are merely examples, and may be freely modified. Furthermore, the model 15 may be used, for example, for analysis of voice and time-series data in addition to image classification using image data as training data.

In addition, not only the most neighboring data of the feature amount generated in the gradient direction but also data located within a predetermined distance from the feature amount may be visualized. Besides, the analysis is not limited to a case where both of the training data and the application source data are used, and only one of the training data and the application source data may also be used.

### [System]

Pieces of information including a processing procedure, a control procedure, a specific name, various types of data, and parameters described above or illustrated in the drawings may be modified in any ways unless otherwise specified. Note that the data selection unit 23 is an example of an acquisition unit, and the gradient calculation unit 24, the feature amount generation unit 25, and the data display unit 26 are an example of a presentation unit.

In addition, each component of each device illustrated in the drawings is functionally conceptual and does not necessarily have to be physically configured as illustrated in the drawings. For example, specific forms of distribution and integration of each device are not limited to those illustrated in the drawings. This means that the whole or a part of the device may be configured by being functionally or physically distributed or integrated in optional units according to various types of loads, usage situations, or the like.

Moreover, all or any part of individual processing functions performed in each device may be implemented by a central processing unit (CPU) and a program analyzed and executed by the CPU, or may be implemented as hardware by wired logic.

### [Hardware]

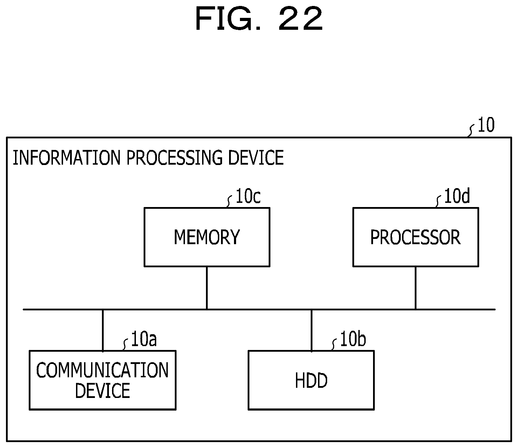

FIG. 22 is a diagram for explaining a hardware configuration example. As illustrated in FIG. 22, the information processing device 10 includes a communication device 10a, a hard disk drive (HDD) 10b, a memory 10c, and a processor 10d. Furthermore, the respective units illustrated in FIG. 4 are mutually connected by a bus or the like.

The communication device 10a is a network interface card or the like and communicates with another device. The HDD 10b stores a program that activates the functions illustrated in FIG. 4, and a DB.

The processor 10d reads a program that executes processing similar to the processing of each processing unit illustrated in FIG. 4 from the HDD 10b or the like, and develops the read program in the memory 10c, thereby activating a process that executes each function described with reference to FIG. 4 or the like. For example, this process executes a function similar to the function of each processing unit included in the information processing device 10. For example, the processor 10d reads a program having a function similar to the function of the machine learning unit 21, the analysis unit 22, or the like from the HDD 10b or the like. Then, the processor 10d executes a process that executes processing similar to the processing of the machine learning unit 21, the analysis unit 22, or the like.

As described above, the information processing device 10 operates as an information processing device that executes an analysis method by reading and executing a program. Furthermore, the information processing device 10 may also implement functions similar to the functions of the above-described embodiments by reading the program mentioned above from a recording medium by a medium reading device and executing the read program mentioned above. Note that the program referred to in other embodiments is not limited to being executed by the information processing device 10. For example, the embodiments may be similarly applied to a case where another computer or server executes the program, or a case where such computer and server cooperatively execute the program.

This program may be distributed via a network such as the Internet. Furthermore, this program may be recorded on a computer-readable recording medium such as a hard disk, flexible disk (FD), compact disc read only memory (CD-ROM), magneto-optical disk (MO), or digital versatile disc (DVD), and may be executed by being read from the recording medium by a computer.

## Claims

1. A non-transitory computer-readable storage medium storing a data presentation program that causes at least one computer to execute a process, the process comprising:
acquiring certain data from an estimation target data set that uses an estimation model, based on an estimation result for the estimation target data set; and
presenting data obtained by changing the certain data in a direction orthogonal to a direction in which loss of the estimation model fluctuates, in a feature space that relates to feature amounts obtained from the estimation target data set.

2. The non-transitory computer-readable storage medium according to claim 1, wherein the process further comprising:
acquiring a first feature amount of the certain data using the estimation model;
generating a second feature amount obtained by changing the first feature amount in the direction in which the loss fluctuates, in the feature space;
acquiring each of feature amounts of respective pieces of estimation data of the estimation target data set excluding the certain data, using the estimation model; and
identifying a neighboring feature amount that has a distance from the second feature amount less than a threshold value, from among the feature amounts of the respective pieces of the estimation data in the feature space, wherein
the presenting presents one piece of the estimation data that is correlated with the neighboring feature amount, together with the certain data.

3. The non-transitory computer-readable storage medium according to claim 2, wherein
the acquiring includes acquiring each of the feature amounts of the respective pieces of the estimation data of the estimation target data set excluding the certain data and each of feature amounts of respective pieces of training data used for machine learning of the estimation model, using the estimation model,
the identifying includes identifying the neighboring feature amount from among the feature amounts of the respective pieces of the estimation data or the feature amounts of the respective pieces of the training data, and
the presenting includes presenting one piece of the estimation data or one piece of the training data that is correlated with the neighboring feature amount, together with the certain data.

4. The non-transitory computer-readable storage medium according to claim 1, wherein
the presenting includes identifying the data obtained by changing the certain data, using, as the feature space, a feature space that relates to the feature amounts generated by an autoencoder in response to input of the estimation target data set.

5. The non-transitory computer-readable storage medium according to claim 4, wherein the process further comprising
executing machine learning of the estimation model using a training data set that includes a plurality of pieces of the training data, and executing machine learning of the autoencoder using the training data set, wherein
the acquiring includes acquiring the certain data in which the estimation model made a mistake in estimation, from among respective pieces of estimation data included in the estimation target data set, and
the presenting includes identifying the data obtained by changing the certain data, using the feature space.

6. The non-transitory computer-readable storage medium according to claim 5, wherein the process further comprising:
acquiring a first feature amount of the certain data using the autoencoder;
generating a second feature amount obtained by changing the first feature amount in the direction in which the loss fluctuates, in the feature space;
acquiring each of feature amounts of respective pieces of the estimation data of the estimation target data set excluding the certain data, using the autoencoder; and
identifying a neighboring feature amount that has a distance from the second feature amount less than a threshold value, from among the feature amounts of the respective pieces of the estimation data in the feature space, wherein
the presenting includes presenting one piece of the estimation data that is correlated with the neighboring feature amount, together with the certain data.

7. The non-transitory computer-readable storage medium according to claim 6, wherein
the presenting includes generating a third feature amount between the first feature amount and the second feature amount by linear interpolation that uses the first feature amount and the second feature amount, generates pseudo data obtained by inputting the third feature amount to the autoencoder, and further presents the pseudo data.

8. The non-transitory computer-readable storage medium according to claim 5, wherein the executing includes:
inputting, for each of the plurality of pieces of the training data that includes data and a label, the data of the training data to the estimation model to acquire a first output result from the estimation model;
inputting, to the estimation model, reconstructed data acquired from the autoencoder by inputting the data of the training data to the autoencoder, to acquire a second output result from the estimation model; and
executing machine learning of the autoencoder such that an error between the first output result and the second output result becomes smaller.

9. A data presentation method for a computer to execute a process comprising:
acquiring certain data from an estimation target data set that uses an estimation model, based on an estimation result for the estimation target data set; and
presenting data obtained by changing the certain data in a direction orthogonal to a direction in which loss of the estimation model fluctuates, in a feature space that relates to feature amounts obtained from the estimation target data set.

10. The data presentation method according to claim 1, wherein the process further comprising:
acquiring a first feature amount of the certain data using the estimation model;
generating a second feature amount obtained by changing the first feature amount in the direction in which the loss fluctuates, in the feature space;
acquiring each of feature amounts of respective pieces of estimation data of the estimation target data set excluding the certain data, using the estimation model; and
identifying a neighboring feature amount that has a distance from the second feature amount less than a threshold value, from among the feature amounts of the respective pieces of the estimation data in the feature space, wherein
the presenting presents one piece of the estimation data that is correlated with the neighboring feature amount, together with the certain data.

11. The data presentation method according to claim 10, wherein
the acquiring includes acquiring each of the feature amounts of the respective pieces of the estimation data of the estimation target data set excluding the certain data and each of feature amounts of respective pieces of training data used for machine learning of the estimation model, using the estimation model,
the identifying includes identifying the neighboring feature amount from among the feature amounts of the respective pieces of the estimation data or the feature amounts of the respective pieces of the training data, and
the presenting includes presenting one piece of the estimation data or one piece of the training data that is correlated with the neighboring feature amount, together with the certain data.

12. The data presentation method according to claim 9, wherein
the presenting includes identifying the data obtained by changing the certain data, using, as the feature space, a feature space that relates to the feature amounts generated by an autoencoder in response to input of the estimation target data set.

13. An information processing device comprising:
one or more memories; and
one or more processors coupled to the one or more memories and the one or more processors configured to:
acquire certain data from an estimation target data set that uses an estimation model, based on an estimation result for the estimation target data set, and
present data obtained by changing the certain data in a direction orthogonal to a direction in which loss of the estimation model fluctuates, in a feature space that relates to feature amounts obtained from the estimation target data set.

14. The information processing device according to claim 13, wherein the one or more processors further configured to:
acquire a first feature amount of the certain data using the estimation model,
generate a second feature amount obtained by changing the first feature amount in the direction in which the loss fluctuates, in the feature space,
acquire each of feature amounts of respective pieces of estimation data of the estimation target data set excluding the certain data, using the estimation model, and
identify a neighboring feature amount that has a distance from the second feature amount less than a threshold value, from among the feature amounts of the respective pieces of the estimation data in the feature space,
present one piece of the estimation data that is correlated with the neighboring feature amount, together with the certain data.

15. The information processing device according to claim 14, wherein the one or more processors configured to:
acquire each of the feature amounts of the respective pieces of the estimation data of the estimation target data set excluding the certain data and each of feature amounts of respective pieces of training data used for machine learning of the estimation model, using the estimation model,
identify the neighboring feature amount from among the feature amounts of the respective pieces of the estimation data or the feature amounts of the respective pieces of the training data, and
present one piece of the estimation data or one piece of the training data that is correlated with the neighboring feature amount, together with the certain data.
